# EUROPEAN PATENT SPECIFICATION

(11) **EP 2 153 067 B1**
(45) Date of publication and mention of the grant of the patent: **17.07.2013**
(21) Application number: 08737599.4
(22) Date of filing: 08.05.2008
(51) Int. Cl.: F03G 6/04, F03G 6/06, F02G 1/043, F24D 17/00

(54) **APPARATUS FOR OBTAINING ELECTRICITY FROM SOLAR ENERGY**
VORRICHTUNG ZUR GEWINNUNG VON STROM AUS SONNENENERGIE
APPAREIL POUR OBTENIR DE L'ELECTRICITE A PARTIR D'ENERGIE SOLAIRE

(30) Priority: 29.05.2007 IT MO20070183
(43) Date of publication of application: 17.02.2010
(73) Proprietor: Fondazione Bruno Kessler, 38100 Trento (IT)
(72) Inventor: BOZZOLI, Alessandro, I-38050 Povo (TN) (IT); CICOLINI, Guido, I-38020 Rabbi (TN) (IT); CONTIN, Giordano, I-37066 Sommacampagna (VR) (IT); FONTANA, Francesco, I-37029 San Pietro in Cariano (VR) (IT); POMARI, Luca, I-37015 Sant'Ambrogio di Valpolicella (VR) (IT)
(74) Representative: Brunacci, Marco
(86) International application number: PCT/IB2008/001123
(87) International publication number: WO 2008/146109

(56) References cited:
- DE-A1- 19 527 272
- DE-U1-202005 017 622
- US-A- 3 967 450
- US-A- 4 094 146
- US-A- 4 414 814
- US-A- 5 735 123

## Description

### Technical Field

This invention relates to an apparatus for obtaining electricity from solar energy.

### Background art

In order to reduce the use of non-renewable energy sources, the use is known of solar energy converted into electricity or heat.

In particular, the use is known of machines that exploit the thermodynamic properties of fluids to generate electricity.

These machines, such as e.g. the Stirling type or Joule-Brayton type hot-air motor, operate using a thermo-vector gas at two different temperatures, in particular using the changes in fluid volume to move mechanisms connected to power generators.

The change in the temperature of the gas is induced by placing it into contact with a hot (or cold) surface, which in turn absorbs energy from a heat source and afterwards, in contact with a cold (or hot) surface, to which the gas yields the previously absorbed thermal energy.

The greater the difference in temperature between the hot and the cold points, the better the efficiency of the system.

In the technical field regarding the invention, the heat source used is the sun. Associating Stirling machines with concentrator-mirror systems, e.g., is known. The mirrors, often associated with dish-shaped surfaces, receive the sunlight and reflect this onto a focus point along the dish axis. One of these machines is positioned at the focus point, and in particular the part of the machine intended to heat the vector fluid.

The energy produced by the irradiation is converted into thermal energy and transferred to the thermo-vector fluid, usually a gas, which in turn operates one or more pistons the movement of which generates a current inside a generator. The mirror system, though very efficient, nonetheless has a number of drawbacks.

In fact, a structure must be installed that is strong enough to support a dish which, to supply an adequate quantity of energy, requires a lot of space, thereby restricting the use of this technology to open spaces.

Furthermore, due to its shape, the dish must always receive sunrays parallel with respect to its axis; this requires a movement system of mirrors and motor that makes the installation of an apparatus of this type even more complex. Another drawback is that the installation of a large dish can represent a risk in the case of strong wind, which can even uproot the entire system with risk of injuring people or damaging objects in the vicinity.

A further drawback is that the system of mirrors is very expensive, making the exploitation of solar energy less advantageous with respect to non-renewable energy sources.

A similar system is disclosed by the patent document US 5,735,123.

The exploitation of solar energy is further known to obtain electricity through the use of solar collectors, or heat solar panels, through which runs a liquid thermo-vector fluid.

In particular, the temperature of the liquid is raised by irradiation until it boils, and the energy of the steam thus obtained is transferred to turbines linked to a generator.

This solution also has a number of drawbacks, because the efficiency of the energy transfer process is very low, making the installation of a solar collector apparatus linked to turbines not very economically viable.

Other systems are disclosed by the patent documents US 4,414,814 and DE 20 2005 017622.

### Object of the Invention

The main aim of this invention is to provide an apparatus particularly for obtaining electricity from solar energy that has high efficiency and at the same time is not restricted by the limits relating to large-size systems.

Another object of this invention is to obtain an apparatus that requires less space and lower installation cost, permitting greater diffusion of the devices for exploiting alternative energies; it is in fact possible to exploit different support surfaces such as roofs, terraces, vertical walls, plots of land, etc.

The last but not least object of this invention is to upgrade the heat efficiency of the system by reducing the heat exchanges between surfaces of different temperature.

Within such technical aim, another object of this invention is to satisfy the previous aims with a simply structure that is relatively easy and practical to implement, safe to use and which operates effectively, as well as being of relatively low cost.

The above objects are all achieved by this apparatus, particularly for obtaining electricity from solar energy, according to claim 1.

### Brief Description of the Drawings

Further characteristics and advantages of this invention will appear more evident from the detailed description of a preferred but not only embodiment of an apparatus particularly for obtaining electricity from solar energy, illustrated indicatively by way of non limiting example in the accompanying drawings, wherein:
figure 1 is a schematic view of an apparatus according to the invention in a first embodiment;
figure 2 is a schematic view of an apparatus not forming part of the present invention.

### Embodiments of the Invention

With particular reference to such figures, an apparatus particularly for obtaining electricity from solar energy has been globally indicated by 1.

The apparatus 1 comprises heating means for heating a thermo-vector fluid consisting in a solar collector 2 through which a thermo-vector fluid flows; the solar collector 2 can be of the pipe type, of the vacuum pipe type, flat or of any other shape.

The thermo-vector fluid is a gas chosen between air, nitrogen, helium or gaseous mixes selected for the purpose of upgrading the thermodynamic efficiency of the apparatus 1.

The solar collector 2 is advantageously associated with a machine 3 of alternative type by means of connection means 4 through which the thermo-vector fluid flows.

The machine 3 is of the alternative type in the sense that it comprises at least one piston 5a and 5b that moves with alternate rectilinear movement inside a cylindrical hollow body 6a and 6b; sliding between the piston 5a and 5b and the respective hollow body 6a and 6b is done hermetically.

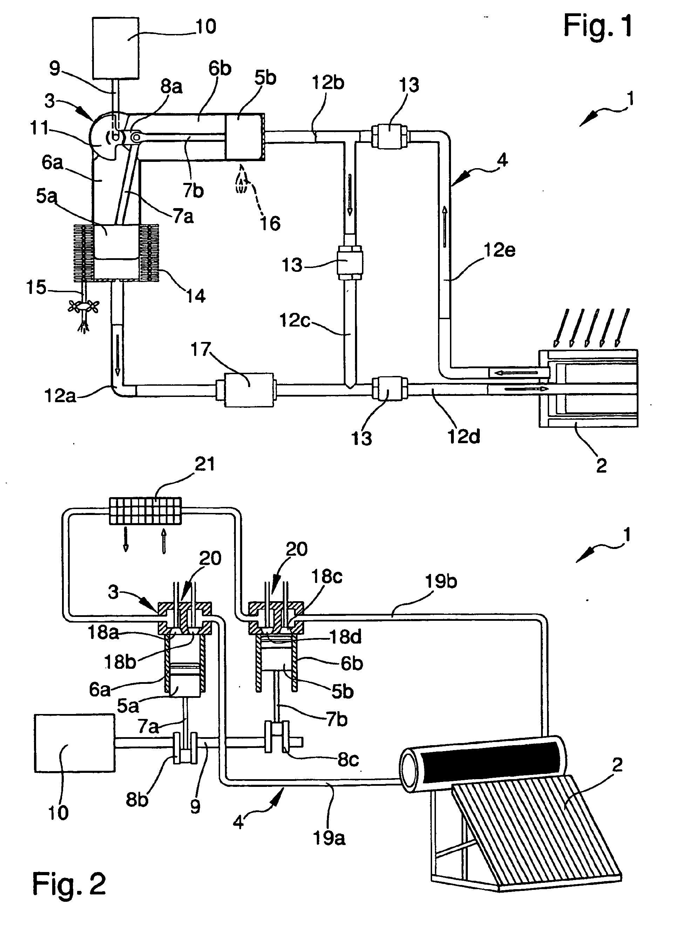

The machine 3 of figure 1 is a motor of the Stirling type, while the machine 3 of figure 2 is a motor of the Joule-Brayton type.

The machine 3 is therefore of the type able to convert the energy contained in a gaseous fluid in the form of heat into a useful mechanical power by means of one or more pistons 5a and 5b, in particular by exploiting the thermodynamic cycles defined as Stirling, Joule-Brayton or Brayton.

The thermo-vector fluid is in contact with the head of the piston 5a and 5b and with the wall of the hollow body 6a and 6b comprised between the head of the piston 5a and 5b and the end-of-stroke end of the hollow body 6a and 6b. Advantageously, the direct contact between the thermo-vector fluid and the piston 5a and 5b permits eliminating the heat exchange surface of the hollow body 6a and 6b required in traditional thermodynamic motors, increasing the efficiency of the machine 3.

The rear part of the piston 5a and 5b is associated with a rotary pushing mechanism of the type that comprises a connecting rod 7a and 7b and a crank 8a, 8b, 8c; the crank 8a, 8b, 8c is in turn associated with a rotary element 9 consisting in a drive shaft.

In the particular embodiments shown in the illustrations, the machines 3 each comprise two pistons 5a and 5b sliding in respective hollow bodies 6a and 6b and connected to a connecting rod 7a and 7b; the two pistons 5a and 5b, furthermore, can be kinetically coupled by means of the push mechanism and the rotary element 9.

The drive shaft 9 operates a transformation mechanism 10 for transforming mechanical energy into electricity, which consists in a power and/or current generator.

The rotary element 9 is advantageously associated with an inertial rotary mass 11 required to make the movement of the pistons 5a and 5b continuous.

In the machine 3 of Stirling type shown in the figure 1, the hollow bodies 6a and 6b are together associated perpendicularly in a single body, in a configuration of the "alpha" type, with the pistons 5a and 5b shifted 90° out of phase.

That the Stirling type machine 3 be made in the "beta" or "gamma" configuration cannot however be ruled out.

In the beta type configuration, the pistons 5a and 5b are positioned in the same cylinder 6a or 6b, while in the gamma type configuration the pistons 5a and 5b are positioned in two different parallel hollow bodies 6a and 6b.

The pistons 5a and 5b are associated with two respective connecting rods 7a and 7b, which are in turn associated with the same crank 8a. The connection means 4, suitable for allowing the transit of the thermo-vector fluid in the apparatus 1, comprise a series of pipes 12a, 12b, 12c, 12d, 12e which connect the solar collector to the machine 3. To one of the hollow bodies 6a, in figure 1 the vertical one, is associated a first pipe 12a, and to the other hollow body 6b is associated a second pipe 12b. Between the first pipe 12a and the second pipe 12b a third pipe 12c is located that connects the first two pipes.

The solar collector 2 is placed in fluidic connection with the machine 3 by means of a fourth pipe 12d through which the thermo-vector fluid enters the solar collector 2 and which is connected to the first pipe 12a by means of a fifth pipe 12e through which the thermo-vector fluid exits from the collector and which is connected to the second pipe 12b.

The connection means 4 are advantageously provided with valve means 13 suitable for directing the thermo-vector fluid from the solar collector 2 into the second pipe 12b through the fifth pipe 12e, for directing the thermo-vector fluid from the second pipe 12b into the first pipe 12a through the third pipe 12c, and for directing the thermo-vector fluid from the first pipe 12a inside the solar collector 2 through the fourth pipe 12d.

The valve means 13 consist of control valves positioned on the third pipe 12c, on the fourth pipe 12d and on the fifth exit pipe 12e; in particular, these valves are of the single-direction type to avoid the reverse flow of the thermo-vector fluid, or can have controlled opening so as to optimise the use of the heat accumulated in the thermo-vector fluid.

The hollow body 6a connected to the first pipe 12a is associated with a cooling system 14 placed in contact with the surface of the hollow body 6a.

The cooling system 14 absorbs heat from the thermo-vector fluid, increasing the temperature difference between hot fluid (exiting from the solar collector 2) and cold fluid (exiting from the hollow body 6a) required for operation of the machine 3; advantageously, this heat is then transferred to a domestic heating circuit 15, in which, e.g., domestic hot water circulates.

Furthermore, the hollow body 6b, which is connected to the second pipe 12b, can be associated with a heat source 16 that can be operated on command, can replace the solar collector or cooperate with this, e.g., in weather conditions when there is not enough sunlight.

The heat source 16 can, e.g., be the flame of a stove, of a burner, or of the boiler used to heat the home.

Usefully, to improve the efficiency of the machine 3, on the first pipe 12a, a heat exchange element 17 is positioned that acts as a regenerator, quickly exchanging heat with the thermo-vector fluid.

The operation of the apparatus 1 in the embodiment shown in figure 1 is the following.

The integration between the solar collector 2 and the machine 3, in the specifc case of the Stirling motor shown in figure 1, is by means of the sharing of the thermo-vector fluid which in point of fact is common to both.

The vector fluid is heated in the solar collector 2 and flows inside the machine 3 transferring to it the thermal energy it has stored. Such energy is converted into mechanical power, following the expansion of the thermo-vector fluid itself inside the hollow body 6b represented horizontally in figure 1, which, in turn, causes the movement of the relative piston 5b.

The vector fluid heated in the solar collector 2 thus performs the function of bringing thermal energy in any case suppliable from outside on the head of the hollow body 6b.

The movement of the piston 5b in the hollow body 6b causes the subsequent compression phase inside the other hollow body 6a (represented vertically in figure 1); efficient cooling by means of the cooling system 14 connected to the heating circuit 15 permits using the residual thermal energy for conventional heating purposes or for the hot water of the domestic hot water system.

The cycle according to Stirling closes with the regeneration of the vector fluid which is again conveyed into the solar collector 2 to be heated again.

A crucial role is played by the valve means 13 used, which, through the programming of the opening and closing times, ensure both the correct adjustment of the Stirling cycle, and the management of the thermal load supplied by the solar collector 2.

The control valves 13, in fact, operate to ensure that the machine 3 works in the best possible conditions, as if there were no connection means 4 to the solar collector 2, ensuring the operation of the system 1.

In the machine of Joule-Brayton type shown in figure 2, and not forming part of the present invention, the rotary push mechanism associated with the pistons 5a and 5b comprises two connecting rods 7a and 7b associated with two different cranks 8b and 8c, each of which operating on the same drive shaft 9.

The two hollow bodies 6a and 6b have openings 18a, 18b, 18c, 18d which allow the thermo-vector fluid to enter and exit; in particular, a first entry opening 18a and a second exit opening 18b of the fluid are present on a hollow body 6a, while a third entry opening 18c and a fourth exit opening 18d are present on the other hollow body 6b.

The connection means 4 connect the second exit opening 18b to the solar collector 2 by means of a first tubular section 19a, and the solar collector 2 to the third entry opening 18c by means of a second tubular section 19b.

Each opening 18a, 18b, 18c, 18d is associated with opening and closing means 20 which regulate the flow of thermo-vector fluid and in particular avoid the reverse flow in the opposite direction to that envisaged by operation.

The opening and closing means 20 are, e.g., single-direction valves which can be operated on command to upgrade the efficiency of the machine 3.

In fluidic connection with the hollow bodies 6a and 6b, and in particular between the second exit opening 18d and the first entry opening 18a, a heat exchanger 21 is placed in which cooling water flows.

The heat exchanger 21, therefore, lowers the temperature of the thermo-vector fluid entering the machine 3 through the first entry opening 18a, and at the same time heats any water intended for domestic uses.

It cannot however be ruled out that the air exiting from the exchanger 21 be released outside and that the machine 3 withdraw fresh air directly from the environment.

The operation of the apparatus 1 in the embodiment shown in figure 2 is the following.

The thermo-vector fluid is heated in the solar collector 2 and by means of the second tubular section 19b and the opening and closing means 20 enters the hollow expansion body 6b through the third entry opening 18c, actively pushing the piston 5b.

In the return movement of the piston 5b, the thermo-vector fluid is ejected from the cylinder 6b through the fourth exit opening 18d and is conveyed through a pipe and relevant valves to the exchanger 21 which lowers its temperature. Through another pipe and relevant valves, the thermo-vector fluid is introduced into the hollow body 6a through the first entry opening 18a and during the return stroke of the piston 5a, the gas is compressed in the first tubular section 19a, and sent back to the solar collector 2 where it receives new thermal energy, thus increasing in temperature and pressure.

The cycle is then repeated.

It has in fact been found how the described invention, as illustrated in figure 1, achieves the proposed objects, and in particular the fact is underlined that the apparatus according to the invention, as illustrated in figure 1, represents a valid alternative to traditional apparatus for the production of electricity obtained by the transformation of the solar energy, combining the efficiency of the transformation with the reduction of system dimensions, of complexity and of installation costs.

The apparatus is in fact suitable both for domestic uses, because it does not require much room nor a system for tracking and positioning with respect to the sun, and for industrial uses employing numerous solar collectors connected in series to various thermo-dynamic machines.

Furthermore, with the apparatus according to the invention, it is possible to exploit surfaces such as, e.g., roofs, terraces, vertical walls that would not be suitable for the installation of complex apparatus such as dish mirrors.

The versatility of the apparatus thus becomes fundamental for purposes of the extensive spread of alternative energies, so as to reduce the use of non-renewable energy sources as much as possible.

## Claims

1. Apparatus (1) for obtaining electricity from solar energy which comprises:
- heating means (2) comprising at least one solar collector for heating a thermo-vector fluid,
- at least one machine (3) which is suitable for transforming the energy of said thermo-vector fluid into mechanical energy and which is associated with said heating means (2) by the interposition of connection means (4) through which said thermo-vector fluid flows, wherein said machine (3) is of the Stirling type and comprises:
- two substantially cylindrical hollow bodies (6a, 6b),
- two pistons (5a, 5b) that move and slide with alternate rectilinear movement inside said hollow bodies (6a, 6b) and in contact with said thermo-vector fluid, and
- at least one rotary pushing mechanism placed in between said pistons (5a, 5b) and at least one rotary element (9), and
- a transformation mechanism (10) associated with said machine (3) for transforming said mechanical energy into electricity,
in which said connection means (4) comprise:
- a first pipe (12a) associated with one of said hollow bodies (6a),
- a second pipe (12b) associated with the other of said hollow bodies (6b),
- a third pipe (12c) between said first pipe (12a) and said second pipe (12b), **characterized by** the fact that said connection means (4) further comprise:
- a fourth pipe (12d) through which said thermo-vector fluid enters in said solar collector (2) and which is connected to the first pipe (12a),
- a fifth pipe (12e) through which said thermo-vector fluid exits from said solar collector (2) and which is connected to the second pipe (12b), and
- valve means (13) suitable for directing the thermo-vector fluid from said solar collector (2) into said second pipe (12b) through said fifth pipe (12e), for directing the thermo-vector fluid from said second pipe (12b) into said first pipe (12a) through said third pipe (12c), and for directing the thermo-vector fluid from said first pipe (12a) inside said solar collector (2) through said fourth pipe (12d).

2. Apparatus (1) according to claim 1, **characterized by** the fact that said rotary pushing mechanism comprises at least one connecting rod (7a, 7b) associated with said pistons (5a, 5b) and at least one crank (8a) associated with said connecting rod (7a, 7b) and said rotary element (9).

3. Apparatus (1) according to one or more of the preceding claims, **characterized by** the fact that said pistons (5a, 5b) can be kinetically coupled.

4. Apparatus (1) according to one or more of the preceding claims, **characterized by** the fact that said rotary element (9) comprises a drive shaft associated with said transformation mechanism (10).

5. Apparatus (1) according to one or more of the preceding claims, **characterized by** the fact that said machine (3) comprises an inertial rotary mass (11) associated with said rotary element (9).

6. Apparatus (1) according to one or more of the preceding claims, **characterized by** the fact that said transformation mechanism (10) is a power/current generator.

7. Apparatus (1) according to one or more of the preceding claims, **characterized by** the fact that said hollow bodies (6a, 6b) are associated with one another arranged substantially crosswise.

8. Apparatus (1) according to one or more of the preceding claims, **characterized by** the fact that said valve means (13) comprise at least one control valve positioned on at least one among said third pipe (12c), said fourth pipe (12d) and said fifth pipe (12e).

9. Apparatus (1) according to one or more of the preceding claims, **characterized by** the fact that at least one of said hollow bodies (6a, 6b) is associated with a cooling system (14) of said thermo-vector fluid.

10. Apparatus (1) according to claim 9, **characterized by** the fact that said cooling system (14) is arranged around the hollow body (6a) associated with said first pipe (12a).

11. Apparatus (1) according to one or more of the preceding claims, **characterized by** the fact that it comprises a heat source (16) associated on command close to at least one of said hollow bodies (6b).

12. Apparatus (1) according to one or more of the preceding claims, **characterized by** the fact that said connection means (4) comprise at least one heat exchange element (17) placed in between said machine (3) and said solar collector (2).

13. Apparatus (1) according to claim 12, **characterized by** the fact that said heat exchange element (17) is located along said first pipe (12a).

## Patentansprüche

1. Vorrichtung (1) zum Erhalten von Elektrizität aus Sonnenenergie, die umfasst:
- Heizmittel (2), die mindestens einen Sonnenkollektor zum Heizen eines Thermo-Vektorfluids umfassen,
- mindestens eine Maschine (3), die geeignet ist, die Energie des Thermo-Vektorfluids in mechanische Energie umzuwandeln, und die den Heizmitteln (2) durch das Zwischenschalten von Verbindungsmitteln (4), durch die das Thermo-Vektorfluid fließt, zugeordnet sind, wobei die Maschine (3) vom Stirling-Typ ist und umfasst:
- zwei im Wesentlichen zylindrische hohle Körper (6a, 6b),
- zwei Kolben (5a, 5b), die sich bewegen und mit einer hin und her gehenden geradlinigen Bewegung innerhalb der hohlen Körper (6a, 6b) und in Kontakt mit dem Thermo-Vektorfluid gleiten, und
- mindestens einen Drehschubmechanismus (10), der zwischen den Kolben (5a, 5b) und mindestens einem Drehelement (9) positioniert ist, und
- einen Umwandlungsmechanismus (10), der der Maschine (3) zum Umwandeln der mechanischen Energie in Elektrizität zugeordnet ist, wobei die Verbindungsmittel (4) umfassen:
- eine erste Leitung (12a), die einem der hohlen Körper (6a) zugeordnet ist,
- eine zweite Leitung (12b), die dem anderen der hohlen Körper (6b) zugeordnet ist,
- eine dritte Leitung (12c) zwischen der ersten Leitung (12a) und der zweiten Leitung (12b), **dadurch gekennzeichnet, dass** die Verbindungsmittel (4) ferner umfassen:
- eine vierte Leitung (12d), durch die das Thermo-Vektorfluid in den Sonnenkollektor (2) eintritt und die mit der ersten Leitung (12a) verbunden ist,
- eine fünfte Leitung (12e), durch die das Thermo-Vektorfluid aus dem Sonnenkollektor (2) austritt und die mit der zweiten Leitung (12b) verbunden ist, und
- Ventilmittel (13), die geeignet sind, das Thermo-Vektorfluid von dem Sonnenkollektor (2) durch die fünfte Leitung (12e) in die zweite Leitung (12b) zu leiten, das Thermo-Vektorfluid von der zweiten Leitung (12b) durch die dritte Leitung (12c) in die erste Leitung (12a) zu leiten und das Thermo-Vektorfluid von der ersten Leitung (12a) innerhalb des Sonnenkollektors (2) durch die vierte Leitung (12d) zu leiten.

2. Vorrichtung (1) nach Anspruch 1, **dadurch gekennzeichnet, dass** der Drehschubmechanismus mindestens einen Verbindungsstab (7a, 7b), der dem Kolben (5a, 5b) zugeordnet ist, und mindestens einen Hebel (8a), der dem Verbindungsstab (7a, 7b) und dem Drehelement (9) zugeordnet ist, umfasst.

3. Vorrichtung (1) nach einem oder mehreren der vorangehenden Ansprüche, **dadurch gekennzeichnet, dass** die Kolben (5a, 5b) kinetisch gekoppelt sein können.

4. Vorrichtung (1) nach einem oder mehreren der vorangehenden Ansprüche, **dadurch gekennzeichnet, dass** das Drehelement (9) eine Antriebsachse, die dem Umwandelmechanismus (10) zugeordnet ist, umfasst.

5. Vorrichtung (1) nach einem oder mehreren der vorangehenden Ansprüche, **dadurch gekennzeichnet, dass** die Maschine (3) eine träge Drehmasse (11), die dem Drehelement (9) zugeordnet ist, umfasst.

6. Vorrichtung (1) nach einem oder mehreren der vorangehenden Ansprüche, **dadurch gekennzeichnet, dass** der Umwandlungsmechanismus (10) ein Kraft/Stromgenerator ist.

7. Vorrichtung (1) nach einem oder mehreren der vorangehenden Ansprüche, **dadurch gekennzeichnet, dass** die hohlen Körper (6a, 6b) im Wesentlichen kreuzweise angeordnet einander zugeordnet sind.

8. Vorrichtung (1) nach einem oder mehreren der vorangehenden Ansprüche, **dadurch gekennzeichnet, dass** die Ventilmittel (13) mindestens ein Steuerventil, das an mindestens einer von der dritten Leitung (12c), der vierten Leitung (12d) und der fünften Leitung (12e) positioniert ist, umfassen.

9. Vorrichtung (1) nach einem oder mehreren der vorangehenden Ansprüche, **dadurch gekennzeichnet, dass** mindestens einer der hohlen Körper (6a, 6b) einem Kühlsystem (14) des Thermo-Vektorfluids zugeordnet ist.

10. Vorrichtung (1) nach Anspruch 9, **dadurch gekennzeichnet, dass** das Kühlsystem (14) um den hohlen Körper (6a), der der ersten Leitung (12a) zugeordnet ist, angeordnet ist.

11. Vorrichtung (1) nach einem oder mehreren der vorangehenden Ansprüche, **dadurch gekennzeichnet, dass** sie eine Heizquelle (16) umfasst, die auf einen Schließbefehl mindestens einem der hohlen Körper (6b) zugeordnet wird.

12. Vorrichtung (1) nach einem oder mehreren der vorangehenden Ansprüche, **dadurch gekennzeichnet, dass** die Verbindungsmittel (4) mindestens ein Wärmeaustauschelement (17), das zwischen der Maschine (3) und dem Sonnenkollektor positioniert ist, umfassen.

13. Vorrichtung (1) nach Anspruch 12, **dadurch gekennzeichnet, dass** das Wärmeaustauschelement (17) entlang der ersten Leitung (12a) angeordnet ist.

## Revendications

1. Dispositif (1) pour l'obtention d'électricité à partir d'énergie solaire, qui comprend :
- des moyens de chauffage (2) comprenant au moins un capteur solaire pour le chauffage d'un fluide caloporteur,
- au moins une machine (3) qui est apte à transformer l'énergie dudit fluide caloporteur en énergie mécanique et qui est associée audits moyens de chauffage (2) par interposition de moyens de raccordement (4) à travers lesquels s'écoule ledit fluide caloporteur, dans lequel ladite machine (2) est du type Sterling et comprend :
- deux corps creux sensiblement cylindriques (6a, 6b),
- deux pistons (5a, 5b) qui se déplacent et coulissent avec un mouvement linéaire alterné à l'intérieur desdits corps creux (6a, 6b) et en contact avec ledit fluide caloporteur, et
- au moins un mécanisme rotatif de poussée placé entre lesdits pistons (5a, 5b) et au moins un élément rotatif (9), et
- un mécanisme de transformation (10) associé à ladite machine (3) pour transformer ladite énergie mécanique en électricité,
dans lequel lesdits moyens de raccordement (4) comprennent :
- une première canalisation (12a) associée à l'un desdits corps creux (6a),
- une deuxième canalisation (12b) associé à l'autre desdits corps creux (6b),
- une troisième canalisation (12c) entre ladite première canalisation (12a) et ladite deuxième canalisation (12b),
***caractérisé par le fait que*** lesdits moyens de raccordement (4) comprennent en outre :
- une quatrième canalisation (12d) par laquelle ledit fluide caloporteur pénètre dans ledit capteur solaire (2) et qui est raccordée à ladite première canalisation (12a),
- une cinquième canalisation (12e) par laquelle ledit fluide caloporteur ressort dudit capteur solaire (2) et qui est raccordée à ladite deuxième canalisation (12b), et
- des moyens de vanne (13) aptes à diriger le fluide caloporteur dudit capteur solaire (2) vers l'intérieur de ladite deuxième canalisation (12b) via ladite cinquième canalisation (12e), à diriger le fluide caloporteur de ladite deuxième canalisation (12b) à ladite première canalisation (12a) via ladite troisième canalisation (12c), et à diriger le fluide caloporteur de ladite première canalisation (12a) vers l'intérieur dudit panneau solaire via ladite quatrième canalisation (12d).

2. Dispositif (1) selon la revendication 1, ***caractérisé par le fait que*** ledit mécanisme rotatif de poussée comprend au moins une bielle (7a, 7b) associée auxdits pistons (5a, 5b) et au moins une manivelle (8a) associée à ladite bielle (7a, 7b) et audit élément rotatif (9).

3. Dispositif (1) selon l'une ou plusieurs des revendications précédentes, ***caractérisé par le fait que*** lesdits pistons (5a, 5b) peuvent être cinétiquement couplés.

4. Dispositif (1) selon l'une ou plusieurs des revendications précédentes, ***caractérisé par le fait que*** ledit élément rotatif (9) comprend un arbre de transmission associé audit mécanisme de transformation (10).

5. Dispositif (1) selon l'une ou plusieurs des revendications précédentes, ***caractérisé par le fait que*** ladite machine (3) comprend une masse rotative inertielle (11) associée audit élément rotatif (9).

6. Dispositif (1) selon l'une ou plusieurs des revendications précédentes, ***caractérisé par le fait que*** ledit mécanisme de transformation (10) est un générateur de tension/courant électrique.

7. Dispositif (1) selon l'une ou plusieurs des revendications précédentes, ***caractérisé par le fait que*** lesdits corps creux (6a, 6b) sont associés l'un à l'autre, disposés de manière sensiblement transversale.

8. Dispositif (1) selon l'une ou plusieurs des revendications précédentes, ***caractérisé par le fait que*** lesdits moyens de vanne (13) comprennent au moins une vanne de commande positionnée sur au moins l'une d'entre ladite troisième canalisation (12c), ladite quatrième canalisation (12d) et ladite cinquième canalisation (12e).

9. Dispositif (1) selon l'une ou plusieurs des revendications précédentes, ***caractérisé par le fait qu'**au* moins l'un desdits corps creux (6a, 6b) est associé à un système de refroidissement (14) dudit fluide caloporteur.

10. Dispositif (1) selon la revendication 9, ***caractérisé par le fait que*** ledit système de refroidissement (14) est disposé autour du corps creux (6a) associé à ladite première canalisation (12a).

11. Dispositif (1) selon l'une ou plusieurs des revendications précédentes, ***caractérisé par le fait qu'**il* comprend une source de chaleur (16) associée sur commande à proximité d'au moins l'un desdits corps creux (6b).

12. Dispositif (1) selon l'une ou plusieurs des revendications précédentes, ***caractérisé par le fait que*** lesdits moyens de raccordement (4) comprennent au moins un élément d'échange thermique (17) placé entre ladite machine (3) et ledit capteur solaire (2).

13. Dispositif (1) selon la revendication 12, ***caractérisé par le fait que*** ledit élément d'échange thermique (17) est situé le long de ladite première canalisation (12a).
